# EUROPÄISCHE PATENTSCHRIFT

(11) **EP 1 469 203 B1**
(45) Veröffentlichungstag und Bekanntmachung des Hinweises auf die Patenterteilung: **13.12.2006**
(21) Anmeldenummer: 04017115.9
(22) Anmeldetag: 15.10.2001
(51) Int. Cl.: F04D 29/22, F04D 29/24

(54) **Förderpumpe**
Feed pump
Pompe d'alimentation

(30) Priorität: 24.10.2000 DE 10052584
(43) Veröffentlichungstag der Anmeldung: 20.10.2004
(62) Teilanmeldung aus: 01124621.2
(73) Patentinhaber: SIEMENS AKTIENGESELLSCHAFT, 80333 München (DE)
(72) Erfinder: Petzold, Sven, 65191 Wiesbaden (DE)

(56) Entgegenhaltungen:
- EP-A- 0 166 104
- EP-A- 0 208 142
- EP-A- 0 411 431
- DE-A- 19 537 790
- US-A- 3 773 432
- US-A- 4 618 096
- US-A- 5 225 729
- FUEST, KLAUS: "Elektrische Maschinen und Antriebe" 1989, VIEWEG , BRAUNSCHWEIG/WIESBADEN , XP002250222 * Seite 50, letzter Absatz - Seite 51, Absatz 5; Abbildung 2.26 *

## Beschreibung

Die Erfindung betrifft eine Fördereinrichtung, insbesondere zur Förderung von Waschflüssigkeit in einem Kraftfahrzeug, mit einer in beide Richtungen antreibbaren, zur Förderung der Waschflüssigkeit in Abhängigkeit von der Antriebsrichtung zu einem von zwei Anschlüssen gestalteten Förderpumpe, wobei die Förderpumpe zur Erzeugung eines jeweils vorgesehenen Förderdrucks für jede der Antriebsrichtungen ausgebildet ist.

Solche Fördereinrichtungen werden in heutigen Kraftfahrzeugen, beispielsweise zur Reinigung einer Frontscheibe und einer Heckscheibe oder von Streuscheiben, häufig eingesetzt und sind aus der Praxis bekannt. In den Anschlüssen der Förderpumpe sind Rückschlagventile angeordnet, welche selbständig in Abhängigkeit von der Antriebsrichtung eines Laufrades der Förderpumpe schalten und die geförderte Waschflüssigkeit zu den Scheiben leiten. Hierdurch ist für eine getrennte Reinigung unterschiedlicher Scheiben nur eine einzige Förderpumpe erforderlich. Die Reinigung der Frontscheibe erfordert jedoch einen besonders hohen Förderdruck, da der hierfür erzeugte Waschflüssigkeitsstrahl bei zu niedrigem Förderdruck von dem Fahrtwind abgelenkt wird. Eine zu der Frontscheibe geführte Waschflüssigkeitsleitung und die Verbindungselemente werden deshalb für den maximal auftretenden Druck, z.B. bei blockierten Düsen infolge des Einfrierens, ausgelegt. Zur Reinigung der Heckscheibe ist ein im Vergleich zur Frontscheibe geringer Förderdruck erforderlich. Ein hoher Förderdruck führt dazu, dass eine zu der Heckscheibe geführte Waschflüssigkeitsleitung ebenso druckstabil und damit kostenintensiv gestaltet sein muss wie die Frontleitung. Dies führt zudem zu einer sehr aufwendigen Verlegung der Waschflüssigkeitsleitung.

Aus der US 3,773,432 A ist eine Förderpumpe zur Erzeugung eines vorgesehenen Drucks für jede der Antriebsrichtungen bekannt. Ein ein Laufrad der Förderpumpe antreibender Elektromotor hat eine Motorkennlinie.

Aus der EP 04 11 431 A2 ist eine Waschflüssigkeitspumpe bekannt, bei der ein Laufrad in zwei Richtungen antreibbar ist. Ober die Anordnung eines Bypass-Kanals lassen sich unterschiedliche Förderdrücke festlegen.

Aus der EP 0 166 104 A1 ist eine Zentrifugalpumpe bekannt, bei der Leitschaufeln in Abhängigkeit von einer Drehrichtung einer Antriebswelle ein- oder ausklappen.

Aus der Praxis sind bereits bidirektionale Förderpumpen bekannt geworden, bei denen die Förderleistung bei einem Antrieb in der einen Drehrichtung größer ist als in der anderen Richtung.

Nachteilig bei der bekannten Fördereinrichtung ist, dass die Förderpumpe sehr kostenintensiv zu fertigen ist.

Man könnte daran denken, die Förderpumpe für den höchsten Förderdruck auszubilden und in einer der Waschflüssigkeitsleitungen eine Drossel zur Druckminderung anzuordnen. Bei einem Verstopfen oder Einfrieren der daran angeschlossenen Waschdüse wird die Waschflüssigkeitsleitung dennoch mit dem vollen, von der Förderpumpe erzeugten Druck beaufschlagt, so dass diese dennoch unnötig druckstabil gestaltet sein muss.

Der Erfindung liegt das Problem zugrunde, eine Fördereinrichtung der eingangs genannten Art so weiterzubilden, dass sich mit ihr jede Scheibe mit einem vorgesehenen Druck reinigen und die zu der den geringeren Druck benötigenden Scheibe geführte Waschflüssigkeitsleitung möglichst kostengünstig fertigen lässt und dass sie besonders kostengünstig herstellbar ist. Dieses Problem wird erfindungsgemäß dadurch gelöst, dass ein das Laufrad antreibender Elektromotor eine laufrichtungsabhängige Motorkennlinie hat.

Durch diese Gestaltung hat der Elektromotor zum Antrieb des Laufrades in der einen Drehrichtung eine höhere Leistung als in der anderen Richtung. Die erfindungsgemäße Fördereinrichtung gestaltet sich hierdurch besonders kostengünstig. Damit lässt sich der von der Förderpumpe erzeugte Förderdruck in Abhängigkeit von der Antriebsrichtung einfach durch entsprechende Kennlinien des Elektromotors auf die vorgesehene Höhe einstellen. Daher lässt sich beispielsweise die zu der Heckscheibe führende Waschflüssigkeitsleitung mit einem geringen Förderdruck beaufschlagen, während die Waschdüse vor der Frontscheibe mit Waschflüssigkeit höheren Drucks versorgt wird. Daher erfordert ausschließlich die zu der Frontscheibe geführte Waschflüssigkeitsleitung eine erhöhte Druckstabilität. Die zu der Heckscheibe geführte Waschflüssigkeitsleitung und insbesondere die Verbindungselemente lassen sich daher besonders kostengünstig, beispielsweise ohne Elastomer-Dichtelemente fertigen.

Die Änderung der Motorkennlinie des Elektromotors gestaltet sich gemäß einer vorteilhaften Weiterbildung der Erfindung konstruktiv besonders einfach, wenn dem Elektromotor bei dessen Ansteuerung in einer der Drehrichtungen ein Widerstand vorgeschaltet ist.

Die Einschaltung und Abschaltung des Widerstandes in dem zu dem Elektromotor geführten Leiter könnte beispielsweise über eine parallel geschaltete Diode erfolgen. Eine Beeinflussung des für die Veränderung des vorgesehenen Förderdrucks erforderlichen Widerstandes durch eine Diode lässt sich gemäß einer anderen vorteilhaften Weiterbildung der Erfindung einfach vermeiden, wenn Hallsensoren an dem Elektromotor zur Erfassung seiner Drehrichtung angeordnet sind und wenn die Motorkennlinie in Abhängigkeit von den Signalen der Hallsensoren veränderbar ist.

Die Änderung der Motorkennlinie erfordert gemäß einer anderen vorteilhaften Weiterbildung der Erfindung einen besonders geringen baulichen Aufwand, wenn der Kommutierungswinkel des Elektromotors in Abhängigkeit von seiner Drehrichtung veränderbar ist.

Bei einer digitalen Ansteuerung des Elektromotors wird gemäß einer anderen vorteilhaften Weiterbildung der Erfindung für die Einstellung der Motorkennlinie kein zusätzlicher baulicher Aufwand benötigt, wenn eine Pulsweitenmodulation der Ansteuerung des Elektromotors in Abhängigkeit von seiner Drehrichtung veränderbar ist.

Die bekannte Fördereinrichtung lässt sich gemäß einer anderen vorteilhaften Weiterbildung einfach nachrüsten, wenn einer der Anschlüsse mit einem Einlasskanal verbunden ist und wenn in der Verbindung ein bei vorgesehenem Druck und Antriebsrichtung schaltendes Überströmventil angeordnet ist. Die Förderpumpe kann hierbei nahezu beliebig gestaltet sein.

Die Erfindung lässt zahlreiche Ausführungsformen zu. Zur weiteren Verdeutlichung ihres Grundprinzips sind drei davon in den zwei Figuren dargestellt und werden nachfolgend beschrieben. Diese zeigen in
- Figur 1:: schematisch eine erfindungsgemäße Fördereinrichtung,
- Figur 2:: einen Teil eines Pumpenrades der Förderpumpe in der Draufsicht.

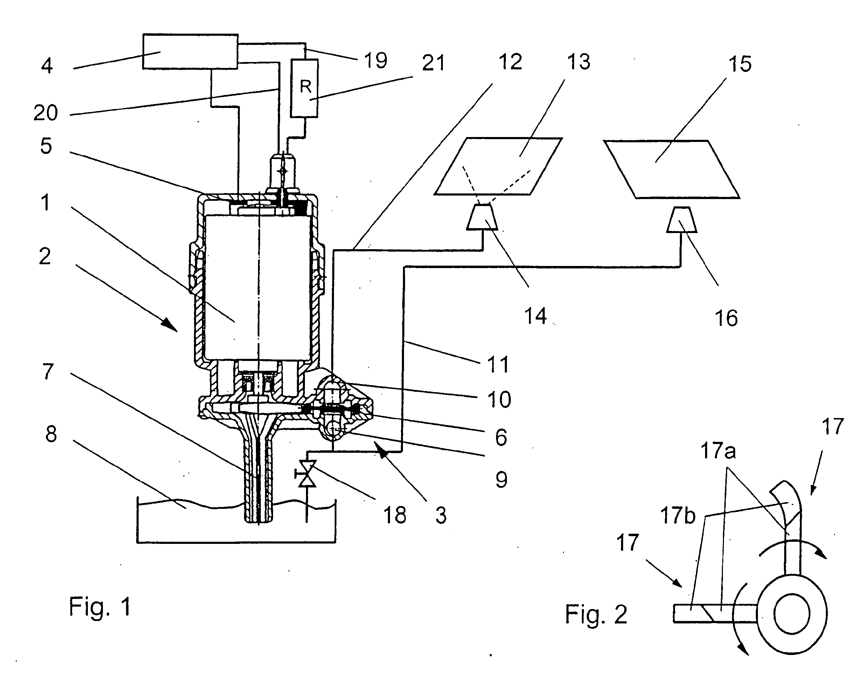

Die Fördereinrichtung in Fig. 1 hat eine von einem Elektromotor 1 angetriebene Förderpumpe 2 und ein an die Förderpumpe 2 angeschlossenes Ventil 3. Der Elektromotor 1 wird über eine Steuereinheit 4 angesteuert und mit elektrischem Strom versorgt. An dem Elektromotor 1 angeordnete Hallsensoren 5 erfassen die Drehrichtung und die Drehzahl und übermitteln elektrische Signale zu der Steuereinheit 4. Das Ventil 3 hat eine Membran 6 und ist in der Zeichnung zur Verdeutlichung geschnitten dargestellt. Die Förderpumpe 2 hat einen Einlasskanal 7, über den sie Waschflüssigkeit aus einem Vorratsbehälter 8 ansaugt. Das Ventil 3 verbindet die Förderpumpe 2 in Abhängigkeit von ihrer Drehrichtung mit zwei Anschlüssen 9, 10. An den Anschlüssen 9, 10 sind Waschflüssigkeitsleitungen 11, 12 angeschlossen. Eine der Waschflüssigkeitsleitungen 11 führt zu einer oder mehreren vor einer Frontscheibe 13 angeordneten Waschdüsen 14. Die andere Waschflüssigkeitsleitung 12 führt zu einer vor einer Heckscheibe 15 des Kraftfahrzeuges angeordneten Waschdüse 16.

In Fig. 2 sind zwei ausgewählte Leitschaufeln 17 der Förderpumpe 2 dargestellt. Die Leitschaufeln 17 setzen sich aus je 2 einander überlappenden Bereichen 17a, 17b zusammen. Der radial innerer Bereich 17a ist formstabil ausgeführt, während der radial äußere Bereich 17b elastisch verformbar ist. Die beiden Bereiche 17a, 17b sind derart zu einander angeordnet, dass sich der äußere Bereich 17b an einer Seite an dem radial inneren Bereich 17a abstützt. Das hat zur Folge, dass sich die Leitschaufeln 17 bei einer Drehrichtung gegen den Uhrzeigersinn nahezu nicht verformen. Die Leitschaufeln 17 weisen damit eine Länge auf, die in etwa dem Radius der Pumpenkammer entspricht. In dieser Drehrichtung erzeugt die erfindungsgemäße Förderpumpe 2 einen Förderdruck von 4 bar. Bei einer Umkehrung der Drehrichtung der Förderpumpe 2 verformt sich mangels fehlender Abstützung der elastische Bereich 17b der Leitschaufeln 17, sodass die im Bezug auf den Radius der Pumpenkammer projizierte Länge der Leitschaufeln 17 kleiner wird. Dadurch erzeugt die Förderpumpe 2 mit 3 bar einen geringeren Druck. Da zur Reinigung der Heckscheibe 15 die Förderpumpe 2 im Uhrzeigersinn angetrieben wird, ist der Druck in der zu der Heckscheibe 15 geführten Waschflüssigkeitsleitung 12 sehr klein. Daher kann die zu der Heckscheibe 15 geführte Waschflüssigkeitsleitung 12 besonders einfach und dünnwandig aufgebaut sein. Bei einem Antrieb der Förderpumpe 2 gegen den Uhrzeigersinn lässt sich die Frontscheibe 13 mit einem besonders hohen Druck reinigen und damit ein Ablenken des Waschflüssigkeitsstrahls durch den Fahrtwind verhindern.

Die Steuereinheit 4 weist zwei Verbindungen 19, 20 mit dem Elektromotor 1 auf. In einer der Verbindungen 20 ist ein ohmscher Widerstand 21 angeordnet. Die Verbindungen 19, 20 werden jeweils für die Ansteuerung des Elektromotors 1 mit der vorgesehenen Drehrichtung genutzt. Hierdurch erhält der Elektromotor 1 in einer seiner Drehrichtungen elektrischen Strom von der Steuereinheit 4 über die Verbindung 19 ohne den Widerstand, während bei einer Ansteuerung des Elektromotors 1 in der entgegengesetzten Drehrichtung die Verbindung 20 mit Widerstand 21 genutzt wird. Der Widerstand 21 begrenzt die Leistung des Elektromotors 1 und damit auch den von der Förderpumpe 2 erzeugten Förderdruck. Durch eine geeignete Wahl der Größe des Widerstandes 21 lässt sich die Heckscheibe 15 mit einem geringen Druck und die Frontscheibe 13 mit einem hohen Druck reinigen. Alternativ dazu lassen sich zur Begrenzung der Leistung des Elektromotors 1 in Abhängigkeit von seiner Drehrichtung der Kommutierungswinkel verändern, sowie mittels einer geeigneten Wahl der Steuereinheit 4 eine Pulsweitenmodulation in Abhängigkeit von der vorgesehenen Drehrichtung des Elektromotors 1 durchführen. Bei diesen Alternativen wird auf den in der Zeichnung dargestellten Widerstand 21 verzichtet.

Die in der Zeichnung dargestellten verschiedenen Ausführungsformen der erfindungsgemäßen Fördereinrichtung zur Begrenzung des Drucks in der zu der Heckscheibe 15 führenden Waschflüssigkeitsleitung 12 können wahlweise einzeln oder in Kombinationen eingesetzt werden.

## Patentansprüche

1. Fördereinrichtung, insbesondere zur Förderung von Waschflüssigkeit in einem Kraftfahrzeug, mit einer in beide Richtungen antreibbaren, zur Förderung der Waschflüssigkeit in Abhängigkeit von der Antriebsrichtung zu einem von zwei Anschlüssen (9, 10) gestalteten Förderpumpe (2), wobei die Förderpumpe zur Erzeugung eines jeweils vorgesehenen Förderdrucks für jede der Antriebsrichtungen ausgebildet ist, **dadurch gekennzeichnet, dass** ein das Laufrad antreibender Elektromotor (1) eine laufrichtungsabhängige Motorkennlinie hat.

2. Fördereinrichtung nach Anspruch 1, **dadurch gekennzeichnet, dass** dem Elektromotor (1) bei dessen Ansteuerung in einer der Drehrichtungen ein Widerstand (21) vorgeschaltet ist.

3. Fördereinrichtung nach Anspruch 1 oder 2, **dadurch gekennzeichnet, dass** der Kommutierungswinkel des Elektromotors (1) in Abhängigkeit von seiner_Drehrichtung veränderbar ist.

4. Fördereinrichtung nach zumindest einem der vorhergehenden Ansprüche, **dadurch gekennzeichnet, dass** eine Pulsweitenmodulation der Ansteuerung des Elektromotors (1) in Abhängigkeit von seiner Drehrichtung veränderbar ist.

5. Fördereinrichtung nach Anspruch 1 oder 2, **dadurch gekennzeichnet, dass** einer der Anschlüsse (10) mit einem Einlasskanal (7) verbunden ist und dass in der Verbindung ein bei vorgesehenem Druck und Antriebsrichtung schaltendes Überströmventil (18) angeordnet ist.

## Claims

1. Feed arrangement, in particular for the feed of washer fluid in a motor vehicle having a feed pump (2) capable of being driven in both directions and designed for the feed of the washer fluid to one of two connections (9, 10) depending on the direction of driving, in conjunction with which the feed pump is embodied for the generation of a stipulated feed pressure in each case for each of the drive directions, **characterized in that** an electric motor (1) for driving the impeller wheel possesses a characteristic curve dependent on the drive direction.

2. Feed arrangement according to Claim 1, **characterized in that** a resistance (21) is connected in series with the electric motor (1) for the purpose of driving it in one of the directions of rotation.

3. Feed arrangement according to Claims 1 or 2, **characterized in that** the angle of commutation of the electric motor (1) is variable depending on its direction of rotation.

4. Feed arrangement according to at least one of the preceding Claims, **characterized in that** a pulse-width modulation of the drive for the electric motor (1) is variable depending on its direction of rotation.

5. Feed arrangement according to Claims 1 or 2, **characterized in that** one of the connections (10) is connected to an inlet channel (7) and **in that** an overflow valve (18) for switching at the designated pressure and direction of driving is arranged in the connection.

## Revendications

1. Système d'alimentation, destiné notamment au transport de liquide de lavage dans un véhicule automobile et comportant une pompe d'alimentation (2), pouvant être entraînée dans les deux sens de rotation et conçue pour transporter le liquide de lavage, en fonction de son sens de rotation, vers l'un de deux raccordements (9, 10), où la pompe d'alimentation est conçue pour produire une pression d'alimentation prévue pour chacun des sens de rotation, **caractérisé par le fait qu'**un moteur électrique (1) entraînant la roue à aubes a une caractéristique dépendant du sens de rotation.

2. Système d'alimentation selon la revendication 1, **caractérisé par le fait qu'**une résistance (21) est mise en circuit en amont du moteur électrique (1) lorsqu'il est commandé dans l'un des sens de rotation.

3. Système d'alimentation selon la revendication 1 ou 2, **caractérisé par le fait que** l'angle de commutation du moteur électrique (1) peut être modifié en fonction de son sens de rotation.

4. Système d'alimentation selon au moins l'une des revendications précédentes, **caractérisé par le fait qu'**une modulation d'impulsions en largeur de l'excitation du moteur électrique (1) peut être modifiée en fonction de son sens de rotation.

5. Système d'alimentation selon la revendication 1 ou 2, **caractérisé par le fait que** l'un des raccordements (10) est raccordé à un canal d'arrivée (7) et qu'une soupape de décharge (18) commutant à une pression donnée pour chaque sens de rotation est montée dans le raccordement.
